Europäisches Patentamt

European Patent Office

Office européen des brevets

(11) Veröffentlichungsnummer: **0 344 469**
**A2**

(19)

# (12) EUROPÄISCHE PATENTANMELDUNG

(21) Anmeldenummer: 89107751.3

(22) Anmeldetag: 28.04.89

(51) Int. Cl.⁴: **C01F 7/14**

(30) Priorität: 03.06.88 US 202796

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: VEREINIGTE ALUMINIUM-WERKE AKTIENGESELLSCHAFT
Georg-von-Boeselager-Strasse 25
D-5300 Bonn 1(DE)

(72) Erfinder: Brown, Neil, Dr.
Friedrichtstrasse 43
D-5300 Bonn 1(DE)

(74) Vertreter: Müller-Wolff, Thomas, Dipl.-Ing.
Vereinigte Aluminium-Werke AG
Georg-von-Boeselager-Strasse 25 Postfach 2468
D-5300 Bonn 1(DE)

(54) Verfahren zur Herstellung von grobkörnigen Agglomeraten des Aluminiumhydroxids.

(57) Es wird ein Verfahren zur Herstellung von grobkörnigen Agglomeraten des Aluminiumhydroxids aus einer alkalischen Aluminatlauge vorgestellt. Dieses Verfahren beinhaltet die Schritte der Aufteilung der alkalischen Aluminatlauge in zwei Teilströme, wobei der eine Teilstrom in den Agglomerationsabschnitt und der andere in den Wachstumsabschnitt der Ausrührung geleitet wird.

Ein Feinimpfer, bestehend aus einem deaktivierten gemahlenen Impfer, wird in den Agglomerationsabschnitt zugegeben und der Strom während des Ausrührens gekühlt, um die Partikel zu agglomerieren. Die agglomerierten Partikel werden abgetrennt, wobei eine teilausgerührte Lauge übrigbleibt, die in den Strom eingeleitet wird, der in den Wachstumsabschnitt eingespeist wird. Der Wachstumsteilstrom wird abgekühlt, um Produkt-Hydroxid auszufällen. Dies wird abgetrennt und die Dünnlauge zurückgeführt. Ein Teil des Produktes wird auf die Feinimpferkorngröße gemahlen und zu der teilausgerührten Lauge zugegeben, wodurch der gemahlene Impfer deaktiviert wird und ein neuer Niederschlag entsteht. Der Mahlimpfer und der neue Niederschlag werden dem Agglomerationsstrom zugeführt, wodurch der Ausrührzyklus geschlossen ist. Da der Ausgangsimpfer für den Prozeß auf mechanischem Wege durch Aufmahlung eines Teils des Produktes entsteht, entfällt der Keimbildungsschritt in den Ausrührern. Die Hydroxidklassierung wird deshalb nicht benötigt. Die Produktion von festen groben $Al(OH)_3$-Partikeln durch diesen Prozeß mit hoher Laugenproduktivität und einmaliger Materialdurchschleusung verringert die Ausrührdimension und erspart dadurch Kapitalinvestitionen und Energieverbrauch.

EP 0 344 469 A2

## Verfahren zur Herstellung von grobkörnigen Agglomeraten des Aluminiumhydroxids.

Die Erfindung betrifft ein Verfahren zur Herstellung von festen grobkörnigen Agglomeraten des Aluminiumhydroxids aus einer alkalischen Aluminatlauge des Bayer-Prozesses.

Bei der Durchführung des Bayer-Prozesses zur Herstellung von Aluminiumoxid aus Bauxit ist man bestrebt, ein grobkörniges Aluminiumhydroxid-Produkt, nachfolgend als "Al(OH)$_3$" bezeichnet, welches nicht mehr als etwa 10 Gew.-% der Partikel unter 45 $\mu$m enthält, zu gewinnen und gleichzeitig eine hohe Laugenproduktivität innerhalb einer annehmbaren Ausrührverweilzeit sicherzustellen.

Unter der Laugenproduktivität ist dabei die Aluminiumhydroxidmenge, die aus einer Volumeneinheit der alkalischen Aluminatlauge ausgerührt wird, zu verstehen. Die grobkörnigen Al(OH)$_3$-Teilchen sollen ferner eine ausreichende Festigkeit aufweisen, um den Zerfalls- und Abriebkräften widerstehen zu können, denen sie in den nachfolgenden Operationen des Transports und der Kalzinierung während der Aluminiumoxid-Produktion ausgesetzt sind.

Das grundlegende Prinzip des Ausrührschrittes im Bayer-Prozeß ist die Impfung einer Lauge mit niedrigem Molverhältnis Na$_2$O/Al$_2$O$_3$ mit vorausgerührtem Al(OH)$_3$. Während der Ausrührung agglomerieren zuerst die Impferpartikel und wachsen danach zu einem festen Al(OH)$_3$-Produkt. Zur Optimierung der Ausrührung sind die Hauptverfahrensparameter Molverhältnis, Temperatur, Impferpartikelgröße und Impfermenge so aufeinander abzustimmen, daß die genannten Ziele innerhalb einer annehmbaren Ausrührverweilzeit erreicht werden.

Aus USP 3,486,850 (J. V. Day), UKP 1,548,168 (N. Brown et al.), USP 4,234,559 (O. Tschamper), USP 4,305,913 (J.L. Anjier), USP 4,311,486 (K. Yamada et al.) ist es bekannt, die Partikelagglomeration und die Partikelwachstumsphase in zwei getrennte Ausrührabschnitte unterzubringen, die beide unter ihren eigenen optimalen Bedingungen betrieben werden können.

In einer modernen Entwicklung wird die Prozeßführung bei erhöhter Laugenkonzentration (Na$_2$O) durchgeführt, um eine erhöhte Laugenproduktivität zu erreichen. Das verlangt ein längere Verweilzeit, welche teilweise durch die Laugenabkühlung während des Ausrührzyklus ausgeglichen wird.

Zum Stand der Technik gehört auch die Verwendung der Al(OH)$_3$-Klassierung zur Abtrennung grober Produktpartikel von den feinen Al(OH)$_3$-Teilchen, welche dann als Feinimpfer rückgeführt werden. Es ist üblich, daß die umlaufende Impfermenge 3 bis 4 mal so groß ist wie die als Produkt abgezogene Menge. Allgemein wird die Ausrührsuspension durch eine Klassiererreihe geführt, um drei Partikelklassen abzutrennen: den Feinimpfer für den Agglomerationsabschnitt, den Grobimpfer/Agglomerat, für den Wachstumsabschnitt und schließlich das Produkt.

Der Zwang zur Al(OH)$_3$-Klassierung entsteht dadurch, daß der Schritt, in dem die feinen Partikel entstehen (um später als Impfer in der Agglomerationsphase der Ausrührung verwendet zu werden) vornehmlich in den Wachstumsausrührern stattfindet. Infolge dessen müssen die Feinpartikel von Partikeln mit der Produktgröße mit denen sie vermischt sind, abgetrennt werden, und zwar am Ende des normalen Ausrührzyklus. Die Abtrennung wird erschwert durch Kristallbruch und Abrieb (d.h. mechanische Keimbildung) bei den Partikeln, welche während des Umpumpens und des Transports der Al(OH)$_3$-Suspension im Hydroxidklassierungsabschnitt anfallen. Es ist in der einschlägigen Fachrichtung bekannt, daß an den Bruchstellen der Oberflächen der Al(OH)$_3$-Impferkristalle große Mengen neuer kleinster Kristalle entstehen lassen können, wenn sie in Kontakt mit alkalischen Aluminatlaugen von niedrigem Molverhältnis geraten, vgl. beispielsweise J. Mordini et al. AIME Light Metals Conference Proceedings 1983, S. 325 bis 336; N. Brown, J. Crystal Growth 12 (1972), S. 39 ff.

Dieses Verhalten kann zur Veränderung der Natur und der Aktivität der Impferkristalle und daher zur Beeinträchtigung der Partikelgrößensteuerung und auch der Laugenproduktivität führen. Abweichungen der Produktpartikelgröße von der Zielgröße erzwingen Anpassungen des Hydroxidklassierungsabschnittes, um Schwankungen auszugleichen. Dadurch wird der Hydroxidklassierungsabschnitt teilweise zu einem Problem, zu dessen Korrektur er eigentlich benötigt wird.

Es ist leicht zu verstehen, daß je kleiner die im Prozeß umlaufende Al(OH)$_3$-Menge, desto stärker wird das Agglomerationspotential des Prozesses bei gegebener Laugenproduktivität und Produktpartikelgröße wird. Je mehr das Produkt Al(OH)$_3$ agglomeriert, desto widerstandsfähiger wird es gegenüber der Korngrößenverkleinerung während der Kalzination zu Aluminiumoxid (vgl. Yamada et al). Daher wird eine verbesserte Al(OH)$_3$-Produktionsmethode benötigt, in der der Schritt der Feinstpartikelbildung aus den Ausrührern vermieden wird, indem die Impferpartikel des Al(OH)$_3$ in wesentlichen einmal durch den Prozeß geschleust werden und als Produkt aus ihm austreten und somit der Bedarf für einen Hydroxidklassierungsabschnitt mit dem konventionellen Al(OH)$_3$-Kreislauf entfällt.

Die Aufgabe der vorliegenden Erfindung ist es, die Al(OH)$_3$-Produktion aus der alkalischen Aluminatlauge des Bayer-Prozesses und die Al(OH)₃-Ausrührung zu verbessern, wodurch die Notwendigkeit einer Hydroxidklassierung entfällt, wobei die Al(OH)₃-Ausrührung in der Weise durchgeführt werden soll, daß gemahlene Al(OH)₃-Partikel als Ausgangsimpfer verwendet werden können, wodurch die Notwendigkeit, Feinstmaterial in dem Wachstumsausrührer entstehen zu lassen, entfällt und die Ausrührung von Al(OH)₃ mit erhöht mosaikartigem (d.h. agglomeriertem) Charakter ermöglicht wird.

Diese Aufgabe wird durch die in den Patentansprüchen angegebenen Merkmale gelöst. Ausgehend von Al(OH)₃-Partikeln, die auf die Abmessungen des Feinimpfers gemahlen wurden und durch Desaktivierung des gemahlenen Impfers in einer alkalischen Aluminatlauge mit einem hohen Molverhältnis sowie durch die nachfolgende schnelle Agglomeration und Verfestigung unter Ausrührbedingungen wird wenig oder kein Feinmaterial während der Ausrührung gebildet.

Im folgenden wird die Erfindung anhand der beiliegenden Zeichnungen erläutert:

Fig. 1 ist eine Beschreibung des erfindungsgemäßen Verfahrens zur Herstellung von grobkörnigem Aluminiumhydroxid-Agglomeraten.

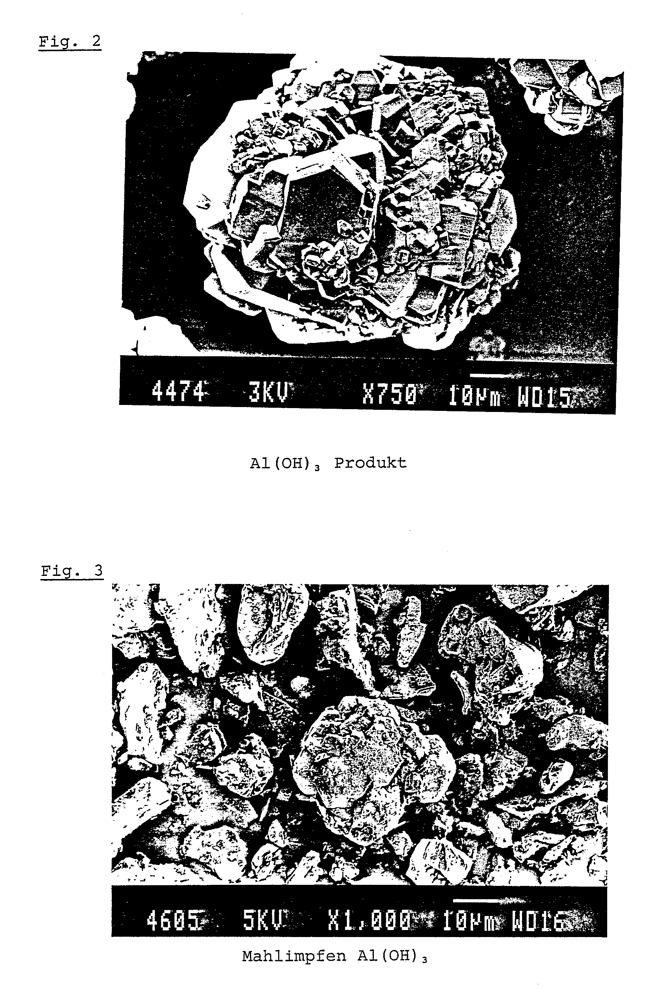

Fig. 2 ist eine Rasterelektronenmikroskop-Aufnahme eines typischen Partikels des Aluminiumhydroxid-Produktes.

Fig. 3 ist eine Rasterelektronenmikroskop-Aufnahme einer Mehrzahl von typischen gemahlenen Partikeln des Aluminiumhydroxidimpfers.

## Beschreibung der Erfindung

Die vorliegende Erfindung betrifft einen Prozeß zur Herstellung verfestigter, grobkörniger Aluminiumhydroxid-Agglomerate aus der alkalischen Aluminatlauge des Bayer-Prozesses.

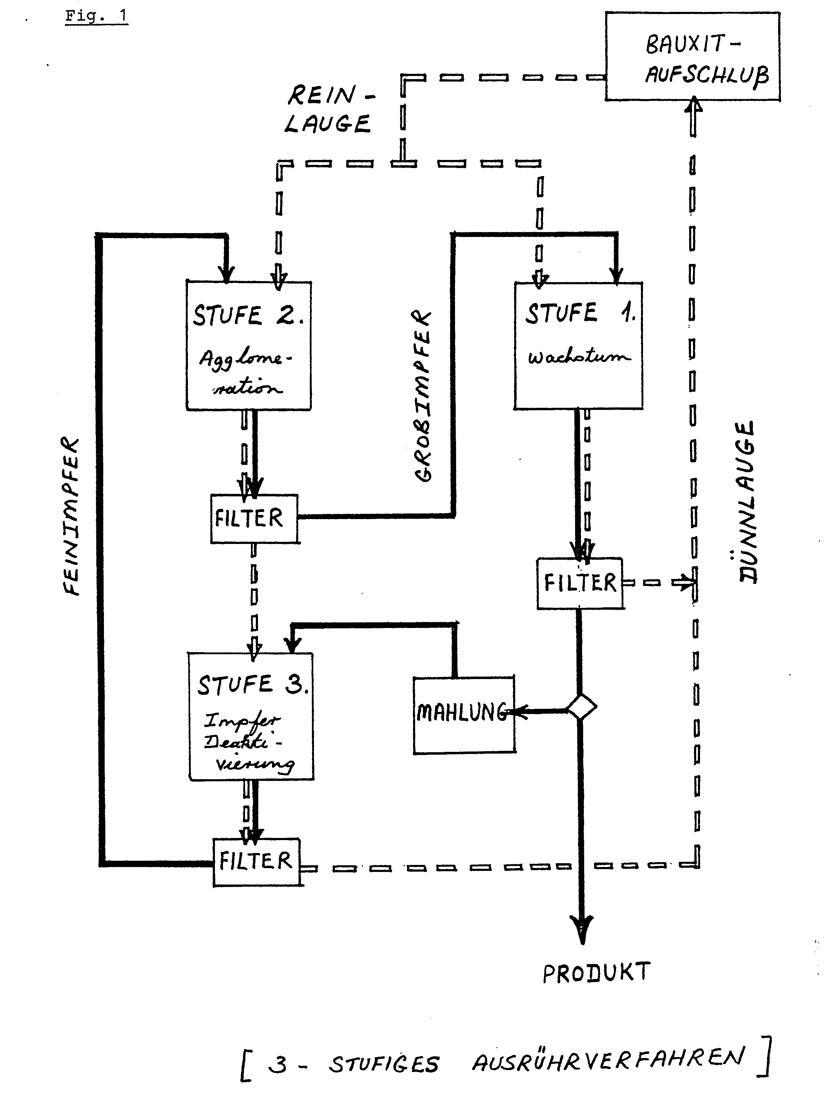

Nach Fig. 1 besteht die Methode in folgenden Schritten:

1. Aufteilung der übersättigten alkalischen Aluminatlauge aus dem Bayer-Prozeß mit einer Temperatur von mindestens 75 °C und einem Molverhältnis von weniger als 1,6 in zwei Ströme;

2. Zugabe von feinen Al(OH)₃-Partikeln als Impfer zum ersten Strom, welcher in den Agglomerationsabschnitt, dargestellt als zwei parallele Abschnitte, die später beschrieben werden, eingespeist wird;

3. Ausrührung des ersten Stromes unter Kühlung, bis das Molverhältnis in der Lauge >2,1 erreicht und die Korngröße der Agglomerate etwa 10 bis 20 % <45 μm beträgt

4. Abtrennung der Agglomerate aus dem ersten Strom, wodurch eine teilweise ausgerührte Lauge entsteht, wobei die Agglomerate zum zweiten Strom der alkalischen Aluminatlauge, welcher in den Wachstumsabschnitt eingespeist wird, zugegeben werden;

5. Ausrührung des zweiten Stroms unter Kühlung bis das Molverhältnis mindestens von 2,5 erreicht wird, vorzugsweise 2,8 und mehr, und die Partikelgröße der verstärkten Agglomerate etwa 5-6 % <45 μm erreicht, wodurch verstärkt agglomerierte Partikel in der Endproduktkorngröße entstehen;

6. Abtrennung der Produktpartikel aus dem zweiten Strom, wodurch Dünnlauge entsteht;

7. Mahlung eines Teils der Partikel des Endproduktes bis zu der Korngröße des Feinimpfers von etwa 80 % <45 μm und Durchschnittsgröße der Partikel von etwa 25-30 μm;

8. Zugabe von gemahlenen Al(OH)₃-Partikeln in einer Menge von etwa 50 bis 100 g/l zu der gekühlten teilweise zersetzten Lauge und Ausrührung unter weiterer Kühlung bei einer Temperatur von 58 - 60 °C bis das Molverhältnis mindestens etwa 2,5 beträgt;

9. Abtrennung der gemahlenen Teilchen und des frisch ausgerührten Al(OH)₃ aus der teilweise zersetzten Lauge, wodurch Dünnlauge zurückbleibt und

10. Zugabe der gemahlenen Partikel und des frisch ausgefallenen Niederschlages zu dem ersten Strom als Impfer, wodurch der Ausrührzyklus geschlossen wird.

Der Kernpunkt des Verfahrens gemäß der vorliegenden Erfindung liegt in der Erhöhung der Temperaturen der alkalischen Aluminatlauge in den Agglomerations- und Wachstumsabschnitten bis auf etwa 75 °C oder höher, wodurch die Feinmaterialbildung in den Ausrührern eliminiert wird. Die sekundäre Keimbildung infolge Übersättigung ist bedeutungslos bei Temperaturen oberhalb 75 °C, vgl. z.B. N. Brown, J. Crystal Growth 29 (1975), S. 309-315.

Das Fehlen der Feinmaterialbildung in den Ausrührern beseitigt die Notwendigkeit der Hydroxidklassifizierung und der vorher erwähnten extensiven Al(OH)₃-Rückführung. Zusätzlich wird die Erniedrigung der Korngrößen infolge Kristallbruch beim Transport durch Umpumpen usw. verhindert.

Der innovative Schlüsselschritt in der erfindungsgemäßen Methode ist die Verwendung der Partikel des Endprodukts, das zu einem Feinimpfer aufgemahlen und dessen "Aktivität" eingesetzt und genutzt wird, um

a) einen geeigneten Feinimpfer als Eintrag in den Agglomerationsabschnitt der Ausrührung bereitzustellen und um

b) gleichzeitig sicherzustellen, daß die teilweise ausgerührte Lauge aus dem Agglomerationsabschnitt der Ausrührung in einem weiteren dritten oder abschließenden Abschnitt ausgerührt wird, so daß deren Aluminiumoxidgehalt auf denjenigen herabgesetzt wird, der der Dünnlaugenzusammensetzung entspricht.

Ein charakteristisches Kennzeichen der erfindungsgemäßen Methode ist deshalb der "abschließende Abschnitt" der Ausrührung, welcher bei einer relativ niedrigen Temperatur mit einer Lauge von relativ hohem Molverhältnis betrieben wird, die mit etwa 50 bis 100 g/l Produkt - Al(OH)$_3$ - gemahlen auf die Abmessungen des Feinimpfers, geimpft wurde.

Gemahlener Impfer kann nicht unmittelbar in alkalischer Aluminatlauge mit niedrigem Molverhältnis verwendet werden, da an den Bruchoberflächen neue Kristalle gebildet werden. Der gesamte gemahlene Impfer muß zuerst "desaktiviert" werden, d.h. sein Keimbildungspotential muß entfernt werden. Dies wird durch die Methode der vorliegenden Erfindung dadurch erreicht, daß der gemahlene Impfer durch den Kontakt mit der teilweise ausgerührten Lauge aus den Agglomerationsausrührern desaktiviert wird, wobei weiteres überschüssiges Aluminiumhydroxid zwecks Verwendung als Impfer entfernt wird.

Die Keimbildungsaktivität des gemahlenen Al(OH)$_3$ ist wie folgt erwähnt in der einschlägigen Fachrichtung (vgl. z.B. Mordini et al., AIME Light Metals Conf. Proceedings, 1983, S. 325-6): Al(OH)$_3$ - gemahlen auf etwa 5 $\mu$m - führt zu einer unkontrollierbaren Bildung von feinen, neuen Al(OH)$_3$-Kristallen, wenn es als Impfer in Laugen mit niedrigen Molverhältnissen bei Temperaturen < 60 $^\circ$C eingesetzt wird. Produkte aus solchen Versuchen verhalten sich in einer mehr "normalen" Weise, wenn sie danach als Impfer in frischer Lauge mit niedrigem Molverhältnis eingesetzt werden. Anders ausgedrückt: Wiederimpfung einer Lauge mit niedrigem Molverhältnis führt bei 60 $^\circ$C und bei einer niedrigen Impferzugabe von etwa 5-20 g/l zu agglomerierten Produkten mit einer Korngröße bis zu 15-20 $\mu$m.

Die erfindungsgemäße Methode läßt sich von dem vorbekannten Wissensstand dadurch unterscheiden, daß der gemahlene Al(OH)$_3$-Impfer, eingesetzt in einer Lauge mit relativ hohem Molverhältnis bei etwa 60 $^\circ$C sich wie ein Impfer verhält, der zu einer geordneten Ausfällung, d.h. ohne Feinmaterialentstehung durch den Keimbildungsmechanismus führt. Deshalb kann der durch Mahlung entstandene Feinimpfer eine Korngröße haben, die kompatibel ist mit den Anforderungen an den Feinimpfer bei dem Ausrührungsschritt des Bayer-Prozesses, d.h. 25-30 $\mu$m.

Erfindungsbeispiel

Eine alkalische Aluminatlauge mit einem Molverhältnis von 1,4 (Na$_2$O-frei = 135 g/l) wird bei einer Temperatur von mindestens 75 $^\circ$C zunächst in zwei Ströme im Verhältnis 1:1 aufgeteilt. Der erste Strom wird in den Agglomerationsteil der Ausrührung geleitet, der andere in den Wachstumsteil. Der erste Strom wird dann in zwei weitere Ströme aufgeteilt, was notwendig ist wegen der niedrigen Impferzugaben, die erforderlich sind, um die eigentliche Agglomeration stattfinden zu lassen.

Jeder Strom wird dann mit 40 g/l Feinimpfer, der eine Durchschnittskorngröße von 25-30 $\mu$m besitzt und etwa 80 Gew.-% Partikeln <45 $\mu$m enthält versetzt. Eine Methode für die Herstellung dieses Feinimpfers wird später beschrieben.

Die Gesamtverweilzeit in dem Agglomerationsabschnitt beträgt etwa 20 Stunden. Die Suspension tritt bei einer Temperatur von etwa 65 $^\circ$C mit einem Molverhältnis von etwa 2,4 aus. Die Partikelgröße der Agglomerate liegt bei etwa 15 % <45 $\mu$m. Die agglomerierten Al(OH)$_3$ Partikel werden beispielsweise mittels Scheibenfilter von der begleitenden Lauge abgetrennt. Es verbleibt eine teilweise ausgerührte Lauge. Die agglomerierten Partikel werden in den Wachstumsabschnitt der Ausrührung überführt.

Die Gesamtverweilzeit in dem Wachstumsabschnitt der Ausrührung beträgt etwa 36 Stunden. Während dieser Zeit wachsen die Agglomerate und werden zu Aluminiumhydroxid-Produkten verfestigt. Die Suspension tritt bei einer Temperatur von etwa 58 $^\circ$C mit einem Molverhältnis von etwa 2,7 aus. Die Partikelgröße der nun verfestigten Agglomerate liegt bei etwa 5 bis 6 % <45 $\mu$m. Das Produkt wird dann mittels Scheibenfilter abgetrennt und die verbleibende Dünnlauge zurückgeführt.

Während der Agglomerations- und Wachstumsphase der Ausrührung findet eine Abkühlung statt, um die kombinierten Vorteile der hohen Anfangstemperatur für maximale Agglomeration und der niedrigen Endtemperatur zur maximalen Verfestigung der soeben entstandenen Agglomerate sowie der maximalen Laugenproduktivität zu erzielen. In Anbetracht dieses Zieles wird die Suspensionstemperatur sowohl in dem Agglomerations- als auch in dem Wachstumsabschnitt der Ausrührung schnell um etwa 10 $^\circ$C nach 6 Stunden Ausrührzeit gesenkt. Das Abkühlen geschieht vorteilhafterweise durch Entspannungskühlung, in Wärmetauschern oder durch jedes Mittel, welches schnell genug Wärmeenergie entziehen kann.

Um den Feinimpfer für den Prozeß bereitzustellen, werden etwa 25 % der Gesamtmenge des Al(OH)₃-Produkts, das in dem Wachstumsabschnitt der Ausrührung entsteht, abgetrennt, entweder vor oder nach der Wäsche mit Wasser zu einer Durchschnittskorngröße von etwa 25 bis 30 µm mit etwa 80 % <45 µm zerkleinert. Naß-Kugelmahlung, Trocken-Walzenmahlung oder Hammermahlung können dazu verwendet werden. Das gemahlene Al₁(OH)₃ wird dann in einer Menge von etwa 80 bis 100 g/l zu der teilweise ausgerührten Lauge, die aus dem Agglomerationsabschnitt austritt, in den abschließenden Abschnitt der Ausrührung zugegeben und dort für eine Gesamtverweilzeit von etwa 16 Stunden gehalten. Die Suspension tritt dann mit einer Temperatur von etwa 58 °C bei einem Laugenmolverhältnis von etwa 2,7 aus. Die erhaltene Korngröße ist praktisch identisch mit der des gemahlenen Al(OH)₃, weil eine relativ kleine Menge neuer Fällung stattfindet und eine geeignete Rührweise verwendet wird, die im allgemeinen durch mechanische Rührer bewerkstelligt wird. Darüberhinaus wird der gemahlene Impfer in dem Endausrührer desaktiviert, wodurch eine unkontrollierte Keimbildung in dem Agglomerationsabschnitt verhindert wird.

Der Ausrührzyklus wird abgeschlossen durch die Abtrennung des gemahlenen Al(OH)₃ und des neuen Niederschlages aus der nun verbrauchten Lauge und durch die Einführung dieses Materials als Feinimpferpartikel in den Agglomerationsabschnitt des Verfahrens.

Auf diese Weise liegt die Laugenproduktivität der erfindungsgemäßen Methode in der Größenordnung von 75 g Al₂O₃/l, während die Produktkorngröße 5 bis 6 Gew.-% <45 µm beträgt.

Rasterelektronenmikroskopische Aufnahmen des Produktes und der Impferkristalle zeigen Bild 2 bzw. Bild 3. Wie aus Bild 2 ersichtlich, können grobe Partikel mit hochgradig mosaikartigem Charakter erhalten werden, wenn man gemäß der Methode der vorliegenden Erfindung verfährt.

Aus Bild 1 ist ersichtlich, daß in einem kontinuierlich ablaufenden Prozeß der Agglomerationsabschnitt aus zwei Ketten in Reihe geschalteter Ausrührer besteht, die jeweils mit zwischengeschalteter Kühlung betrieben werden. Damit wird das Optimum für die Betriebsdaten und -parameter des vorliegenden Beispiels erreicht, aber die vorliegende Erfindung ist nicht auf diese Anordnung oder auf den Grad des mosaikartigen Charakters des Produkt-Al(OH)₃ aus dem Bild 2 beschränkt. Beispielsweise kann der Grad des mosaikartigen Charakters durch Verwendung von feinem gemahlenen Al(OH)₃-Impfer erhöht werden, was infolge seiner kleineren Größe in der Agglomeration kleinere Impferzugaben erforderlich machen würde.

Die physikalischen Eigenschaften des Produkts Al(OH)₃ sind vom Grad des mosaikartigen Charakters abhängig. Verfestigte Agglomerate sind die bevorzugte Form von Al(OH)₃, wenn es darum geht, den Kräften, die einen Kornzerfall verursachen während der abschließenden Kalzinierung in dem Prozeß entgegenzuwirken. Jedoch müssen die Partikel auch fest genug sein, um den desintegrierenden Kräften zu widerstehen, welche während der Manipulationen zwischen der Hydroxid-ausrührung und der Kalzination zu Aluminiumoxid einwirken. In dieser Hinsicht weist das Produkt gemäß der vorliegenden Erfindung einen Attrition Index von nicht mehr als 4 % auf, was bedeutet, daß die Produktpartikel im wesentlichen immer innerhalb der angestrebten Korngrößenbereichs von nicht mehr als 10 % <45 µm liegen.

Der Attrition Index (AI) wird folgendermaßen definiert:

$$AI = \frac{[\text{Gew.-\% } >45 \ \mu m]_{vor} - [\text{Gew.-\% } >45 \ \mu m]_{danach}}{[\text{Gew.-\% } >45 \ \mu m]_{vor}}$$

Der Attrition-Index-Test kann in einem modifizierten Forsythe-Hertwig-Gerät (die Testdurchführung beschreibt D.J. Braun, AIME Light Metal Conf. Proceedings 1984, S. 257-268) mit 50 g Al(OH)₃ durchgeführt werden, wobei die Korngrößenverteilung vor und nach dem Abriebtest bestimmt werden kann, beispielsweise mittels der Coulter-Counter-Methode.

Die erfindungsgemäße Methode weist folgende Vorteile auf:
- es entstehen wenige oder keine feinen neuen Kristalle in den Ausrührern, so daß eine Hydroxidklassierung nicht benötigt wird,
- die Aktivität und die Korngröße des Impfers können konstant gehalten werden durch entsprechende Steuerung des Mahlvorgangs,
- die relativ kleine Korngröße der Primärkristalle und die hieraus sich ergebende große spezifische Oberfläche des Impfers, kombiniert mit der Laugenabkühlung während der Fällung, bedeuten eine hohe Ausrührausbeute an Al(OH)₃,
- der dritte Abschnitt der Ausrührung wird bei einer niedrigeren Temperatur betrieben, verglichen mit der üblichen Praxis, wodurch das Endmolverhältnis in der Dünnlauge am Ende der Ausrührung entsprechend erhöht wird.

So kann eine im wesentlichen einheitliche und stabile Produktkorngröße erreicht werden, während gleichzeitig die Gesamtabmessungen der Ausrührung gesenkt werden, wodurch sich Ersparnisse bei Kapitalinvestitionen und Energieverbrauch ergeben.

Die vorliegende Erfindung wurde anhand eines bevorzugten Durchführungsbeispiels beschrieben.

## Ansprüche

1. Verfahren zur Herstellung von grobkörnigen Agglomeraten des Aluminiumhydroxids aus einer alkalischen Aluminatlauge, gekennzeichnet durch nachfolgende Schritte:

a) Aufteilung einer übersättigten alkalischen Aluminatlauge mit einer Temperatur von mindestens 75 °C und mit einem Molverhältnis von weniger als 1,6 in einen ersten und zweiten Teilstrom;

b) Zugabe von feinen Impferpartikeln des $Al(OH)_3$ zu dem ersten Teilstrom vor der Einleitung in den Agglomerationsstromabschnitt;

c) Ausrühren und Kühlen des ersten Teilstroms, bis das Molverhältnis der Lauge >2,1 erreicht ist und agglomerierte Partikel entstehen;

d) Abtrennung der Agglomerate aus dem ersten Strom, wobei eine teilzersetzte Lauge zurückbleibt;

e) Zugabe der Agglomerate zu dem zweiten Strom der alkalischen Aluminatlauge, welche in den Wachstumsabschnitt der Ausrührung geleitet wird;

f) Ausrühren und Kühlen des zweiten Stroms bis das Molverhältnis des zweiten Stroms mindestens 2,5 erreicht, wobei die Agglomerate wachsen und zu Produktpartikeln verfestigt werden;

g) Abtrennung der Produktpartikel aus dem zweiten Strom, wobei eine Dünnlauge zurückbleibt;

h) Mahlen eines Teils der Produktpartikel, um einen gemahlenen Impfer mit den Abmessungen eines Feinimpfers herzustellen;

i) Zugabe des gemahlenen Impfers zu der teilweise ausgerührten Lauge, welche in den abschließenden Ausrührungsabschnitt eingeleitet wird;

j) Ausrühren und Kühlen der teilausgerührten Lauge, bis das Molverhältnis mindestens 2,5 beträgt und ein neuer Niederschlag entsteht;

k) Abtrennung des gemahlenen Impfers und des neuen Niederschlags, wobei Dünnlauge zurückbleibt und

l) Zugabe des gemahlenen Impfers und des neuen Niederschlags als Feinimpfer zu dem ersten Strom, wodurch der Ausrührzyklus abgeschlossen wird.

2. Verfahren nach Anspruch 1, dadurch gekennzeichnet, daß der erste Teilstrom und der zweite Teilstrom in einem Volumenverhältnis von 50:50 aufgeteilt werden.

3. Verfahren nach einem der vorhergehenden Ansprüche, dadurch gekennzeichnet, daß der gemahlene Impfer und der neue $Al(OH)_3$-Niederschlag eine Korngröße von etwa 80 Gew.-% <45 $\mu$m aufweist mit einer Durchschnittskorngröße von etwa 25 bis 30 $\mu$m, wobei die Agglomerate eine Korngröße von etwa 10 bis 20 % <45 $\mu$m und die Produktpartikel eine Korngröße von etwa 5-6 % <45 $\mu$m aufweisen.

4. Verfahren nach einem der vorherigen Ansprüche, dadurch gekennzeichnet, daß der gemahlene Al-$(OH)_3$-Impfer zu der teilausgerührten Lauge in einer Menge von etwa 50-100 g/l zugegeben wird.

5. Verfahren nach einem der vorhergehenden Ansprüche, dadurch gekennzeichnet, daß die Feinimpfer-Partikel des $Al(OH)_3$ zu dem ersten Teilstrom in einer Menge von etwa 20 bis 60 g/l zugegeben werden, wobei sie mindestens 50 Gew.-% <45 $\mu$m $Al(OH)_3$ enthalten.

6. Verfahren nach einem der vorhergehenden Ansprüche, dadurch gekennzeichnet, daß die Agglomerate zu dem zweiten Teilstrom in einer Menge von etwa 140 bis 280 g/l zugegeben werden, wobei sie nicht mehr als 20 Gew.-% der Partikel >45 $\mu$m enthalten.

7. Verfahren nach einem der vorhergehenden Ansprüche, dadurch gekennzeichnet, daß jeweils der erste und der zweite Teilstrom um 10 °C innerhalb von 6 Stunden in dem Agglomerations- und Wachstumsabschnitt der Ausrührung abgekühlt wird.

8. Verfahren nach einem der vorhergehenden Ansprüche, dadurch gekennzeichnet, daß die Abkühlung während des Ausrührens in Plattenwärmetauschern oder in Rohrbündelwärmetauschern vorgenommen wird.

9. Verfahren nach einem der vorhergehenden Ansprüche, dadurch gekennzeichnet, daß das abschließende Ausrühren bei etwa 58-62 °C vorgenommen wird.

Fig. 1

[ 3 - STUFIGES   AUSRÜHRVERFAHREN ]

Fig. 2

Al(OH)$_3$ Produkt

Fig. 3

Mahlimpfen Al(OH)$_3$